# EUROPEAN PATENT SPECIFICATION

(11) **EP 1 980 534 B1**
(45) Date of publication and mention of the grant of the patent: **13.03.2013**
(21) Application number: 08100042.4
(22) Date of filing: 03.01.2008
(51) Int. Cl.: C01G 31/00, C01G 37/00, C01G 39/00, C01G 41/00, C01G 45/00, C01G 49/00, C01G 51/00, H01M 4/58

(54) **Negative active material for rechargeable lithium battery, method of preparing same, and rechargeable lithium battery including same**
Negativ-Aktives Material für eine wiederaufladbare Lithiumbatterie, Herstellungsverfahren desselben und wiederaufladbare Lithiumbatterie dieses enthaltend
Matériau actif négatif pour une batterie au lithium rechargeable, procédé de préparation de celui-ci, et batterie au lithium rechargeable comprenant celui-ci

(30) Priority: 13.04.2007 KR 20070036561
(43) Date of publication of application: 15.10.2008
(73) Proprietor: Samsung SDI Co., Ltd., Suwon-si Gyeonggi-do (KR)
(72) Inventor: Kim, Tae-Wan, 575, Shin-dong,Yeongtong-gu, Suwon-si Gyeonggi-do (KR); Kim, Joon-Sup, 575, Shin-dong,Yeongtong-gu, Suwon-si Gyeonggi-do (KR); Kim, Sung-Soo, 575, Shin-dong,Yeongtong-gu, Suwon-si Gyeonggi-do (KR); Yin, Ri-Zhu, 575, Shin-dong,Yeongtong-gu, Suwon-si Gyeonggi-do (KR); Lee, Jin-Ho, Yeongtong-gu, Suwon-si Gyeonggi-do (KR); Choi, Wan-Uk, 575, Shin-dong,Yeongtong-gu, Suwon-si Gyeonggi-do (KR)
(74) Representative: Hengelhaupt, Jürgen

(56) References cited:
- EP-A- 1 511 101
- JP-A- 2007 173 096
- US-A1- 2006 088 766
- N. VAN LANDSCHOOT , E. M. KELDER AND J. SCHOONMAN: "Citric acid-assisted synthesis and characterization of doped LiCoVO4" SOLID STATE IONICS, vol. 166, no. 3-4, 2004, pages 307-316, XP002475389
- A. SIVASHANMUGAM, R. THIRUNAKARAN, MEIJING ZOU, MASAKI YOSHIO, JUN-ICHI YAMAKI AND S. GOPUKUMAR: "Glycine-Assisted Sol-Gel Combustion Synthesis and Characterization of Aluminum-Doped LiNiVO4 for Use in Lithium-Ion Batteries" JOURNAL OF THE ELECTROCHEMICAL SOCIETY, vol. 153, no. 3, 24 January 2006 (2006-01-24), pages A497-A503, XP002475390

## Description

### BACKGROUND OF THE INVENTION

### 1. Field of the Invention

The present invention relates to negative active materials for rechargeable lithium batteries, to methods of preparing the same, and to rechargeable lithium batteries including the same.

### 2. Description of the Related Art

Lithium rechargeable batteries have recently drawn attention as power sources for small and portable electronic devices. These batteries use organic electrolyte solutions and thereby have discharge voltages twice as high as conventional batteries using alkaline aqueous solutions. Accordingly, lithium rechargeable batteries have high energy densities.

Lithium-transition element composite oxides capable of intercalating lithium, such as LiCoO₂, LiMn₂O₄, LiNiO₂, LiNi₁₋ₓCoₓO₂ (0<x<1), LiMnO₂, and so on, have been researched for use as positive active materials in lithium rechargeable batteries.

Various carbon-based materials, such as artificial and natural graphite, and hard carbon, which all can intercalate and deintercalate lithium ions have been used as negative active materials. Of the carbon-based materials, graphite increases battery discharge voltage and energy density because it has a low discharge potential of -0.2V compared to lithium. Batteries using graphite as the negative active material have high average discharge potentials of 3.6V and excellent energy densities. Furthermore, among the aforementioned carbon-based materials, graphite is the most comprehensively used since graphite guarantees better battery cycle life due to its outstanding reversibility. However, when used as a negative active material, graphite active materials have low densities and consequently low capacities (theoretical capacity: 2.2 g/cc) in terms of energy density per unit volume. Further, there is some danger of explosion, combustion or the like when the battery is misused or overcharged, because graphite is likely to react with the organic electrolyte at high discharge voltages.

To address these concerns, research has recently been conducted into oxide negative electrodes. For example, amorphous tin oxide has a high capacity per weight (800 mAh/g). However, this oxide has resulted in some critical defects such as a high initial irreversible capacity of up to 50%. Furthermore, its discharge potential is more than 0.5V, and it shows a smooth voltage profile, which is unique in the amorphous phase. Consequently, it has been difficult to prepare a tin oxide that is applicable in batteries. Furthermore, a part of the tin oxide has tended reduce into tin metal during charge or discharge reactions, which exacerbates its acceptance for use in batteries.

In another oxide negative electrode, LiₐMg_{b}VO_{c} (where 0.05 ≤ a ≤ 3, 0.12 ≤ b ≤ 2, and 2 ≤ 2c-a-2b ≤ 5) is used as the negative active material. Another lithium secondary battery includes a Li_{1.1}V_{0.9}O₂ negative active material. However, such oxide negative electrodes do not impart sufficient battery performance and therefore further research into oxide negative materials has been conducted.

### SUMMARY OF THE INVENTION

According to one aspect of the invention, there is provided a negative active material for a rechargeable lithium battery. The negative active material comprises a compound represented by Formula (1) and has an average particle size ranging from 50nm to 30µm:

Li₁₊ₓV_{1-x-y}M_{y}O_{2+z} (1)

wherein 0.01 ≤ x ≤ 0.5, 0 < y ≤ 0.3, -0.2 ≤ z ≤ 0.2, and M is selected from the group consisting of transition elements, alkali metals, alkaline earth metals, semi-metals, and combinations thereof.

Preferably, M is selected from the group consisting of Fe, Al, Cr, Mo, Ti, W, Zr, Sr, Mn, and combinations thereof. Most preferred, M is selected from the group consisting of Cr, Ti, Co, and combination thereof.

The negative active material may further have an average particle size ranging from 0.5µm to 20µm.

Preferably, y is ranging from 0.005 to 0.1.

According to another aspect of the invention, there is provided a method for manufacturing the negative active material for a rechargeable lithium battery as mentioned before. The method comprises the steps of:
mixing a lithium source material, a vanadium source material and a M source material in a solvent mixture of an acid and water to prepare a solution;
drying the solution by heat treatment at a temperature ranging from 70 to 400°C and/or decomposing the solution or a product of the drying step by heat treatment at a temperature ranging from 400 to 700°C to achieve an intermediate product; and
calcinating the intermediate product by heat treatment at a temperature ranging from 700 to less than 1300°C.

The lithium source material may be a compound soluble in acid and water, preferably selected from the group consisting of Li₂C₂O₄, LiOH, LiNO₃, Li₂SO₄, hydrates of LiOH, hydrates of LiNO₃, hydrates of Li₂SO₄, and combinations thereof. Most preferred, the lithium source material is lithium oxalate (Li₂C₂O₄).

The vanadium source material may be a water insoluble compound, preferably selected from the group consisting of V₂O₃, V₂O₄, V₂O₅, NH₄VO₃, and combinations thereof. Most preferred, the vanadium source is V₂O₃.

The acid may be a carboxylic acid, preferably selected from the group consisting of oxalic acid, citric acid, and combinations thereof. Most preferred, the acid is oxalic acid.

The M source material may be selected from the group consisting of oxides, nitrides, hydroxides of transition elements, alkali metals, alkaline earth metals, semi-metals, and combinations thereof. Preferably, the M source material is Cr₂(SO₄)₃.

A volume ratio of water to acid may be in the range of 1 : 1 to 1 : 19.

According to another aspect of the invention, there is provided a rechargeable lithium battery comprising a negative electrode including a negative active material as mentioned before;
a positive electrode comprising a positive active material capable of reversibly intercalating and deintercalating lithium ions; and
an electrolyte.

The present invention provides a negative active material for a rechargeable lithium battery that improves battery capacity and cycle-life characteristics.

The present invention provides a method of preparing a negative active material that economically produces a negative active material for a rechargeable lithium battery.

### BRIEF DESCRIPTION OF THE DRAWINGS

The above and other features and advantages of the present invention will be better understood with reference to the following detailed description when considered in conjunction with the attached drawings, in which:
FIG. 1 is a schematic cross-sectional view of a rechargeable lithium battery according to one embodiment of the present invention; and
FIG. 2 is a graph comparing the cycle-life characteristics of battery cells prepared according to Example 1 and Comparative Example 1.

### DETAILED DESCRIPTION OF THE INVENTION

A negative active material for a rechargeable lithium battery according to the present invention includes a compound represented by Formula (1).

Li₁₊ₓV_{1-x-y}M_{y}O_{2+z} (1)

In Formula (1), 0.01 ≤ x ≤ 0.5, 0 < y ≤ 0.3, -0.2 ≤ z ≤ 0.2, and M is selected from transition elements, alkali metals, alkaline earth metals, semi-metals, and combinations thereof. According to one embodiment, M is selected from Fe, Al, Cr, Mo, Ti, W, Zr, Sr, Mn, or combinations thereof. According to other embodiment, M is selected from Cr, Ti, Co, or combinations thereof.

According to another embodiment preferably, y is ranging from 0.005 to 0.1.

The negative active material has an average particle size ranging from 50nm to 30µm. Preferably, the negative active material has an average particle size ranging from 0.5µm to 20µm. When the average particle size of the negative active material is less than 50nm, a large amount of solvent should be used to prepare a composition for the negative active material for preparation of the electrode, thus making it difficult to prepare the electrode. When the average particle size of the negative active material is more than 30µm, efficiency deteriorates, which is undesirable.

The negative active material has a ratio of (003) plane diffraction intensity to (104) plane diffraction intensity ranging from 1:0.01 to 1 when measured using a Cu Kα X-ray. The negative active material may in particular have a ratio of (003) plane diffraction intensity to (104) plane diffraction intensity ranging from 1:0.1 to 1. When the ratio of (003) plane diffraction intensity to (104) plane diffraction intensity is out of this range, crystalline properties deteriorate, resulting in a decreased amount that reacts with lithium, which is undesirable.

The specific surface area of the negative active changes very little, hence no cracks occur after charge and discharge. For example, after five charge/discharge cycles at 0.5C, the specific surface area of the negative active material of the present invention increases to less than 20 times the specific surface area before the charge/discharge cycles. In particular, after five charge/discharge cycles at 0.5C, the specific surface area of the negative active material of the present invention increases to from 2 to 20 times the specific surface area before the charge/discharge cycles. The specific surface area of the negative active materials according to the present invention increase to a lesser extent than the specific surface area of negative active materials prepared according to conventional solid-phase methods, which increase to 30 to 50 times the starting surface area. Therefore, the negative active materials of the present invention may prevent capacity reductions caused by repeated charge/discharge cycles, thereby improving cycle-life characteristics.

The negative active materials having the aforementioned physical properties may be prepared according to the following method.

First, a lithium source material and a vanadium source material are mixed in a solvent composed of an acid and water. Further, a M source material is also added to the mixture, depending on the desired end product.

The lithium source material may be an acid soluble and water soluble compound selected from Li₂C₂O₄, LiOH, LiNO₃, Li₂SO₄, hydrates of LiOH, hydrates of LiNO₃, hydrates of Li₂SO₄, and combinations thereof. According to one embodiment, Li₂C₂O₄ (lithium oxalate) may be the lithium source material.

The vanadium source material may be a water insoluble compound selected from V₂O₃, V₂O₄, V₂O₅, NH₄VO₃, and combinations thereof. According to one embodiment, V₂O₅ may be the vanadium source material. According to a conventional solid-phase method, the lithium source material and the vanadium source material would be mixed in a solid-phase through milling, and calcinated under a nitrogen atmosphere. However, as economical materials such as V₂O₅ cannot be used in such a method, production cost is high.

The mixing ratio of the lithium source material, the vanadium source material, and the M source material may be properly adjusted such that the negative active material according to Formula (1) is acquired.

The M source material is a compound selected from transition elements, alkali metals, alkaline earth metals, semi-metals and combinations thereof. The compound may include oxides, nitrides, hydroxides and combinations thereof.

The acid may be a carboxylic acid that is able to dissolve the lithium source material, reduce the vanadium source material, and chelate the dissolved lithium source material and reduced vanadium source material. The carboxylic acid may be selected from oxalic acid, citric acid and combinations thereof. According to one embodiment, the carboxylic acid is oxalic acid.

A volume mixing ratio of the acid to water may range from 1 : 1 to 1 : 19 in the solvent. Since the acid chelates the dissolved lithium source material and the reduced vanadium source material, when the amount of the acid is less than 1 volume ratio, the lithium source material may remain undissolved. Thus, some vanadium source material remains. When the amount of the acid is more than 1/19 volume ratio, the carbon component of the acid may remain in the subsequent calcination process, which is undesirable.

An intermediate product is obtained by drying the mixture. In the drying process, the solvent is volatilized, and a salt including lithium, vanadium and M is formed and precipitated. The kind of salt differs according to the kind of acid used. For example, when oxalic acid is used, an oxalate salt is formed. The drying process is performed at a temperature ranging from 70 to 400°C. The solvent is volatilized in the drying process. When the drying process is performed at a temperature lower than 70°C, the solvent is not removed. When it is performed at a temperature greater than 400°C, the intermediate product is decomposed.

Subsequently, the dried product is calcinated. The salt is decomposed during calcination, thereby producing the negative active material of the present invention. The calcination is carried out at a temperature ranging from 700 to less than 1300°C. The calcination is thus performed at a temperature lower than conventional calcination temperatures, which range from 1300 to 1500°C. Therefore, it is possible to prevent lithium from volatilizing, to prevent vanadium from overly oxidizing, and to prepare a negative active material having high crystallinity.

Instead of performing the before mentioned drying process, the negative active material may be also prepared by heating at a higher temperature and thereby decomposing the intermediate product. The heat decomposition is carried out at a temperature ranging from 400 to 700°C. The calcination process is additionally performed after the heat decomposition process. The calcination is performed at a temperature ranging from 700 to less than 1300°C.

The negative active material may be used for a rechargeable lithium battery. Rechargeable lithium batteries may be classified into lithium ion batteries, lithium ion polymer batteries, and lithium polymer batteries according to the presence of a separator and the kind of electrolyte used in the battery. Rechargeable lithium batteries may be formed of a variety of shapes and sizes, including cylindrical, prismatic, and coin-type batteries. They may be thin film batteries or be rather bulky in size. Structures and fabricating methods for lithium ion batteries pertaining to the present invention are well known in the art.

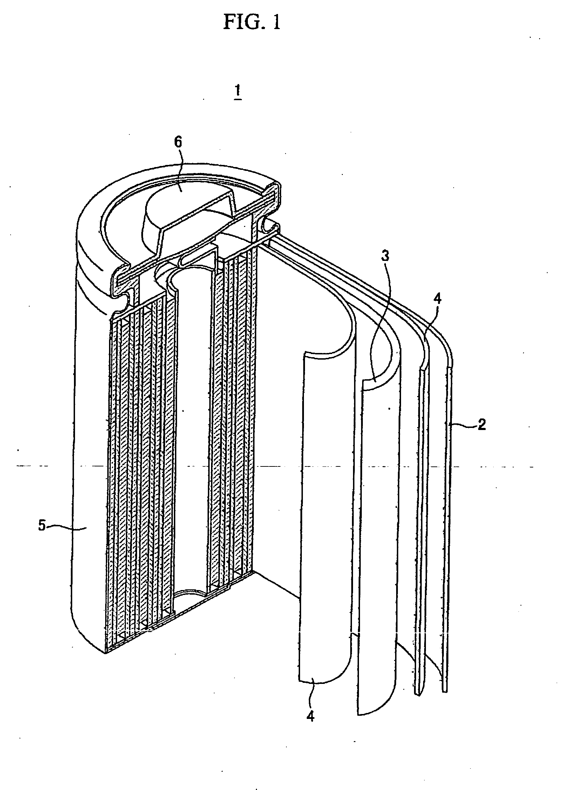

FIG. 1 is a schematic cross-sectional view of a rechargeable lithium battery according to one embodiment of the present invention. Referring to FIG. 1, the rechargeable lithium battery 1 includes an electrode assembly including a negative electrode 2, a positive electrode 3, and a separator 4 between the negative electrode 2 and the positive electrode 3. The electrode assembly is placed in a battery case 5 and sealed with a sealing member 6. The battery is completed by injecting an electrolyte into the sealed battery case to immerse the electrode assembly in the electrolyte.

The rechargeable lithium battery includes a negative electrode including the above negative active material, a positive electrode including a positive active material, and a non-aqueous electrolyte.

The negative electrode includes the negative active material, a binder, and optionally a conductive agent.

The binder acts to bind negative active material particles with each other and also to bind negative active material particles with the current collector. Examples of suitable binders include polyvinylalcohol, carboxymethylcellulose, hydroxypropylenecellulose, diacetylenecellulose, polyvinylchloride, polyvinylpyrrolidone, polytetrafluoroethylene, polyvinylidene fluoride, polyethylene, and polypropylene.

Any electrically conductive material may be used as the conductive agent, so long as it does not cause any chemical change. Examples of suitable conductive agents include natural graphite, artificial graphite, carbon black, acetylene black, ketjen black, carbon fiber, polyphenylene derivatives, metal powders or metal fibers including copper, nickel, aluminum, silver, and so on, and combinations thereof.

The negative electrode also includes a current collector that supports the negative active material layer including the negative active material, binder, and optional conductive agent. The current collector may be selected from copper foils, nickel foils, stainless steel foils, titanium foils, nickel foams, copper foams, polymer substrates coated with conductive metals, and combinations thereof.

The positive active material of the positive electrode includes a lithiated intercalation compound that is capable of reversibly intercalating and deintercalating lithium. The positive active material includes a composite oxide including lithium and a metal selected from cobalt, manganese, nickel, and combinations thereof. Examples of suitable positive active materials include those represented the following Formulas 2 to 25.

**Formula 2** LiₐA_{1-b}B_{b}D₂

In Formula 2, 0.95 ≤ a ≤ 1.1 and 0 ≤ b ≤ 0.5.

**Formula 3** LiₐE_{1-b}B_{b}O_{2-c}F_{c}

In Formula 3, 0.95 ≤ a ≤ 1.1, 0 ≤ b ≤ 0.5, and 0 ≤ c ≤ 0.05.

**Formula 4** LiE_{2-b}B_{b}O_{4-c}F_{c}

In Formula 4, 0 ≤ b ≤ 0.5, and 0 ≤ c ≤ 0.05.

**Formula 5** LiₐNi_{1-b-c}Co_{b}B_{c}Dₐ

In Formula 5, 0.95 ≤ a ≤ 1.1, 0 ≤ b ≤ 0.5, 0 ≤ c ≤ 0.05, and 0 ≤ α ≤ 2.

**Formula 6** LiₐNi_{1-b-c}Co_{b}B_{c}O₂₋ₐFₐ

In Formula 6, 0.95 ≤ a ≤ 1.1, 0≤ b ≤ 0.5, 0 ≤ c ≤ 0.05, and 0 < α < 2.

**Formula 7** LiₐNi_{1-b-c}Co_{b}B_{c}O₂₋ₐF₂

In Formula 7, 0.95 ≤ a ≤ 1.1, 0 ≤ b ≤ 0.5, 0 ≤ c ≤ 0.05, and 0 < α < 2.

**Formula 8** LiₐNi_{1-b-c}Mn_{b}B_{c}Dₒ

In Formula 8, 0.95 ≤ a ≤ 1.1, 0 ≤ b ≤ 0.5, 0 ≤ c ≤ 0.05, and 0 < α ≤ 2.

**Formula 9** LiₐNi_{1-b-c}Mn_{b}B_{c}O₂₋ₐFₒ

In Formula 9, 0.95 ≤ a ≤ 1.1, 0 ≤ b ≤ 0.5, 0 ≤ c ≤ 0.05, and 0 < α < 2.

**Formula 10** LiₐNi_{1-b-c}Mn_{b}B_{c}O₂₋ₐF₂

In Formula 10, 0.95 ≤ a ≤ 1.1, 0 ≤ b ≤ 0.5, 0 ≤ c ≤ 0.05, and 0 < α < 2.

**Formula 11** LiₐNi_{b}E_{c}G_{d}O₂

In Formula 11, 0.90 ≤ a ≤ 1.1, 0 ≤ b ≤ 0.9, 0 ≤ c ≤ 0.5, and 0.001 ≤ d ≤ 0.1.

**Formula 12** LiₐNi_{b}Co_{c}Mn_{d}GeO₂

fn Formula 12, 0.90 ≤ a ≤ 1.1, 0 ≤b≤ 0.9, 0≤c≤0.5, 0≤d≤0.5, and 0.001 ≤e≤0.1.

**Formula 13** LiₐNiG_{b}O₂

In Formula 13, 0.90 ≤ a ≤ 1.1, and 0.001 ≤ b ≤ 0.1.

**Formula 14** LiₐCoG_{b}O₂

In Formula 14, 0.90 ≤ a ≤ 1.1, and 0.001 ≤ b ≤ 0.1.

**Formula 15** LiₐMnG_{b}O₂

In Formula 15, 0.90 ≤ a ≤ 1.1, and 0.001 ≤ b ≤ 0.1.

**Formula 16** LiₐMn₂G_{b}O₄

In Formula 16, 0.90 ≤ a ≤ 1.1, and 0.001 ≤ b ≤ 0.1.

**Formula 17** QO₂

**Formula 18** QS₂

**Formula 19** LiQS₂

**Formula 20** V₂O₅

**Formula 21** LjV₂0₅

**Formula 22** LifO₂

**Formula 23** LiNiVO₄

**Formula 24** Li_{3-f}J₂(PO₄)₃

In Formula 24, 0 ≤ f ≤ 3.

**Formula 25** Li_{3-f}Fe₂(PO₄)₃

In Formula 25, 0 ≤ f ≤ 2.

In the above Formulas 2 to 25, A is selected from Ni, Co, Mn, and combinations thereof. B is selected from Al, Ni, Co, Mn, Cr, Fe, Mg, Sr, V, rare earth elements, and combinations thereof. D is selected from O, F, S, P, and combinations thereof. E is selected from Co, Mn, and combinations thereof. F is selected from F, S, P, and combinations thereof. G is a transition element or lanthanide element selected from Al, Cr, Mn, Fe, Mg, La, Ce, Sr, V, and combinations thereof. Q is selected from Ti, Mo, Mn, and combinations thereof. I is selected from Cr, V, Fe, Sc, Y, and combinations thereof. J is selected from V, Cr, Mn, Co, Ni, Cu, and combinations thereof.

The positive electrode further includes a binder and a conductive agent. The binder and conductive agent are the same as in the negative electrode, described above. The positive electrode also includes a current collector. One example of a suitable current collector is aluminum foil.

The negative and positive electrodes may be fabricated as follows. An active material composition including the active material, a binder, and optionally a conductive agent are mixed in a solvent and the mixture is applied on a current collector, such as aluminum. This electrode manufacturing method is well known, and thus is not described in detail in the present specification. For the solvent, any solvent used for battery fabrication may be used. One example of a suitable solvent is N-methylpyrrolidone.

In the above rechargeable lithium battery, the non-aqueous electrolyte includes a non-aqueous organic solvent and a lithium salt. The non-aqueous organic solvent acts as a medium for transmitting ions taking part in the electrochemical reaction of the battery. The non-aqueous organic solvent may include a carbonate-based, ester-based, ether-based, ketone-based, alcohol-based, or aprotic solvent. Examples of suitable carbonate-based solvents include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethyl carbonate (EMC), ethylene carbonate (EC), propylene carbonate (PC), butylene carbonate (BC), and so on. Examples of suitable ester-based solvents include n-methyl acetate, n-ethyl acetate, n-propyl acetate, dimethylacetate, methylpropionate, ethylpropionate, γ-butyrolactone, decanolide, valerolactone, mevalonolactone, caprolactone, and so on. Examples of suitable ether-based solvents include dibutyl ether, tetraglyme, diglyme, dimethoxyethane, 2-methyltetrahydrofuran, tetrahydrofuran, and so on. Examples of suitable ketone-based solvents include cyclohexanone, and so on. Examples of suitable alcohol-based solvents include ethyl alcohol, isopropyl alcohol, and so on. Examples of suitable aprotic solvents include nitriles such as X-CN (where X is a C2 to C20 linear, branched, or cyclic hydrocarbon, a double bond, an aromatic ring, or an ether bond), amides such as dimethylformamide, dioxolanes such as 1,3-dioxolane, sulfolanes, and so on.

The non-aqueous organic solvent may include a single solvent or a mixture of solvents. When the organic solvent includes a mixture, the mixture ratio may be controlled in accordance with the desired battery performance.

A carbonate-based solvent may include a mixture of a cyclic carbonate and a linear carbonate. The cyclic carbonate and the linear carbonate may be mixed together in a volume ratio ranging from 1:1 to 1:9. When such a mixture is used as the electrolyte, electrolyte performance may be enhanced.

In addition, the electrolyte may further include mixtures of carbonate-based solvents and aromatic hydrocarbon-based solvents. The carbonate-based solvents and the aromatic hydrocarbon-based solvents may be mixed together in a volume ratio ranging from 1:1 to 30:1.

The aromatic hydrocarbon-based organic solvent may be represented by the following Formula 26.

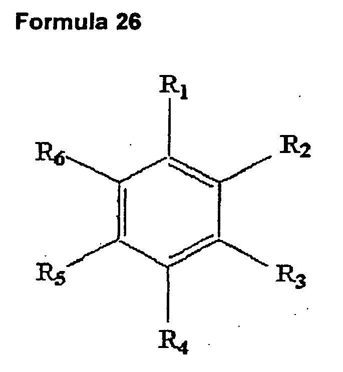

In Formula 26, R₁ through R₆ are each independently selected from hydrogen, halogens, C1 to C10 alkyls, C1 to C10 haloalkyls, and combinations thereof.

Examples of suitable aromatic hydrocarbon-based organic solvents include benzene, fluorobenzene, 1,2-diffuorobenzene, 1,3-difluorobenzene, 1,4-Bifluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluarotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodatoluene, 1,2,4-triiadatoluene, xylene, and combinations thereof.

The non-aqueous electrolyte may further include an additive such as vinylene carbonate or fluoroethylene carbonate in order to improve battery cycle-life. The additive may be used in an appropriate amount for improving cycle-life.

The lithium salt is dissolved in the non-aqueous organic solvent to supply lithium ions in the battery. This enables the basic operation of the rechargeable lithium battery, and facilitates transmission of lithium ions between positive and negative electrodes. Examples of suitable lithium salts include supporting electrolyte salts such as LiPF₆, LiBF₄, LiSbF₆, LiAsF₆, LiCF₃SO₃, LiN(SO₂C₂F₅)₂, Li(CF₃SO₂)₂N, LiC₄F₉SO₃, LiClO₄, LiAlO₄, LiAlCl₄, LiN(CₓF₂ₓ₊₁SO₂)(C_{y}F_{2y+1}SO₂) (where x and y are natural numbers), LiCl, Lil, and lithium bisoxalate borate. The lithium salt may be present in a concentration ranging from 0.1 to 2.0M. When the lithium salt concentration is less than 0.1M, electrolyte performance may deteriorate due to low electrolyte conductivity. When the lithium salt concentration is greater than 2.0M, lithium ion mobility may be reduced due to an increase in electrolyte viscosity.

The electrolyte may be a solid electrolyte, such as a polyethylene oxide polymer electrolyte or a polymer electrolyte including at least one polyorganosiloxane side chain or polyoxyalkylene side chain. Alternatively, the electrolyte may be a sulfide electrolyte, such as Li₂S-SiS₂, Li₂S-GeS₂, Li₂S-P₂S₅, or Li₂S-B₂S₃. In another embodiment, the electrolyte may be an inorganic electrolyte such as Li₂S-SiS₂-Li₃PO₄ or Li₂S-SiS₂-Li₃SO₄.

The rechargeable lithium battery generally includes a positive electrode, a negative electrode, and an electrolyte. The battery may further include a separator as needed.

The separator may include any material used in conventional lithium secondary batteries. Examples of suitable separator materials include polyethylene, polypropylene, polyvinylidene fluoride, and multi-layers thereof, such as polyethylene/polypropylene double-layered separators, polyethylene/polypropylene/polyethylene triple-layered separators, and polypropylene/polyethylene/polypropylene triple-layered separators.

The following examples illustrate embodiments of the present invention.

### Example 1

An intermediate product was prepared by mixing Li₂C₂O₄ and V₂O₃, Cr₂(SO₄)₃ in a mixture of oxalic acid and water (volume ratio of oxalic acid to water: 1:1). Li₂C₂O₄, V₂O₃ and Cr₂(SO₄)₃ were mixed in a molar ratio of 1.1 : 0.89 : 0.01. The mixture was dried at 200°C. The solvent was volatilized and removed during drying, and a salt of lithium vanadium oxalate was produced and precipitated. The acquired product was decomposed at 700°C, and calcinated at 1000°C to thereby prepare Li_{1.1}V_{0.89}Cr_{0.01}O₂ as one component of the negative active material. The average particle size of the negative active material ranged from 1 to 20µm.

A negative active material slurry was prepared by mixing Li_{1.1}V_{0.89}Cr_{0.01}O₂ with a polyvinylidene fluoride binder and a carbon black conductive material in a wt% ratio of 90 : 5 : 5 in an N-methylpyrrolidone solvent. The negative active material slurry was coated on foil, dried, and compressed to thereby prepare a negative electrode.

### Example 2

A negative electrode was prepared as in Example 1, except that Li_{1.2}V_{0.79} Cr_{0.01}O₂ was prepared as one component of the negative active material by mixing Li₂C₂O₄ and V₂O₃, Cr₂(SO₄)₃ at a molar ratio of 1.2 : 0.79 : 0.01.

### Example 3

A negative electrode was prepared as in Example 1, except that Li_{1.3}V_{0.7}O₂ was prepared as one component of the negative active material by mixing Li₂C₂O₄ and V₂O₃, Cr₂(SO₄)₃ at a molar ratio of 1.3 : 0.69 : 0.01.

### Comparative Example 1

LiOH and V₂O₃ were mixed in a molar ratio of 1:0.5, and the mixture was pulverized. The powder product was calcinated at about 900°C, and screened with a sifter to thereby prepare LiVO₂ as one component of the negative active material. The average particle size of the prepared negative active material ranged from 5 to 20µm. A negative electrode was prepared as in Example 1 except that LiVO₂ -was used as one component of the negative active material.

### Comparative Example 2

A negative active material slurry was prepared by mixing a natural graphite negative active material with an average particle size of 18µm with a polyvinylidene fluoride binder in a wt% ratio of 94 : 6 in an N-methylpyrrolidone solvent. The negative active material slurry was coated on copper foil to thereby prepare a negative electrode.

Rechargeable lithium battery cells were manufactured using the negative electrodes prepared according to Examples 1 through 3 and Comparative Examples 1 and 2 through a conventional manufacturing method. Then, initial discharge capacities and initial efficiencies of each battery were measured and the results are presented in the following Table 1. Also, each battery cell was charged and discharged at 0.5C five times, and the specific surface area of each negative electrode was measured and compared with the initial specific surface area. The results are shown in the following Table 1. In addition, X-ray diffraction intensities were measured by CuKa X-ray, and the I(104)/I(003) diffraction intensity ratios are shown in the following Table 1.

**Table 1**

| | Initial discharge capacity (mAh/cc) | Initial efficiency (%) | Increase of specific surface area (5^{th} cycle /initial) | Intensity ratio I(104)/I(003) |
|---|---|---|---|---|
| Example 1 | 605 | 86 | 2.5 times | 0.27 |
| Example 2 | 607 | 85 | 2.7 times | 0.26 |
| Example 3 | 604 | 85 | 3.0 times | 0.23 |
| Comparative Example 1 | 50 | 30 | * | 0.1 |
| Comparative Example 2 | 540 | 90 | * | * |

| | | | | |
|---|---|---|---|---|
| In Table 1, * denotes measurement impossibility | | | | |

As shown in Table 1, the battery cells using negative electrodes prepared according to Examples 1 to 3 had superior initial discharge capacity and initial efficiency compared to the cell using a negative electrode prepared according to Comparative Example 1. Also, it can be seen from Table 1 that the battery cells using the negative electrodes prepared according to Examples 1 to 3 had superior initial discharge capacities to the cell using the negative electrode prepared according to Comparative Example 2. The initial efficiencies of Examples 1 through 3 deteriorated similarly to that of Comparative Example 2. The specific surface areas of the battery cells prepared according to Examples 1 through 3 increased between about 2.5 times to 3 times the initial surface area. In contrast, after five cycles, the specific surface area of the battery cell prepared according to Comparative Example 2 increased to such an extent that it could not be measured. Also, it turned out that the specific surface area of the battery cell prepared according to Comparative Example 1 increased to such an extent that it also could not be measured.

In addition, Comparative Example 1 has a 1(104)/1(003) intensity ratio of 0.1 and a remarkably low initial discharge capacity compared to the initial discharge capacities of Examples 1 through 3 with intensity ratios between 0.24 and 0.26. Also, since the battery cell of Comparative Example 2 used natural graphite, no peaks appeared in I(104) and I(003). Therefore, the ratio could not be measured.

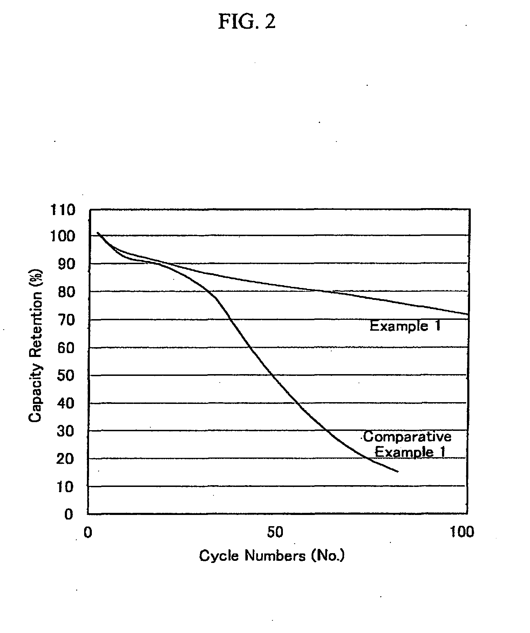

The battery cells prepared according to Example 1 and Comparative Example 1 were subjected to charge/discharge performed at 0.5C, and capacity retention (i.e., cycle-life) of each cell was measured and the results are shown in FIG. 2. FIG. 2 is a graph comparing the capacity retention ratios (ratio of capacity after one charge/discharge cycle to capacity after repeated charge/discharge cycles) of the cell according to Example 1 and the cell according to Comparative Example 1. The capacity retention ratio is a relative value. The first value in the graph of FIG. 2 is the capacity after one charge/discharge cycle. Thus, it is shown as 100% in both Example 1 and Comparative Example 1, regardless of the actual capacity value.

As shown in FIG. 2, the battery cell using the negative electrode prepared according to Example 1 measured a capacity retention of about 70% after 100 charge/discharge cycles. However, the battery cell prepared according to Comparative Example measured a remarkably deteriorated capacity at about 30 cycles, and measured a capacity retention of less than 20% at about 80 cycles.

The negative active materials for rechargeable lithium batteries according to the present invention thus provides rechargeable lithium batteries having improved capacities and cycle-life characteristics.

## Claims

1. A negative active material for a rechargeable lithium battery, comprising:
a compound represented by Formula (1 and having an average particle size ranging from 50nm to 30µm:
Li₁₊ₓV₁₋ₓ₋yM_{y}O_{2+z} (1)
wherein 0.01 ≤ x ≤ 0.5, 0 < y ≤ 0.3, -0.2 ≤ z ≤ 0.2, and M is selected from the group consisting of Fe, Al, Cr, Mo, Ti, W, Zr, Sr, Mn and combinations thereof,
wherein the negative active material is **characterized in that**
a specific surface area of the negative active material after five charge/discharge cycles at 0.5C is to from 2 to 20 times larger than the specific surface area before the charge/discharge cycles before the charge/discharge cycles.

2. The negative active material of claim 1, wherein M is selected from the group consisting of Cr, Ti, Co, and combinations thereof.

3. The negative active material of any of the preceding claims, wherein the negative active material has an average particle size ranging from 0.5µm to 20µm.

4. The negative active material of any of the preceding claims, wherein y is ranging from 0.005 to 0.1.

5. A method for manufacturing a negative active material for a rechargeable lithium battery represented by any of claims 1 to 4, the method comprising the steps of:
mixing a lithium source material, a vanadium source material and a M source material in a solvent mixture of an acid and water to prepare a solution;
drying the solution by heat treatment at a temperature ranging from 70 to 400°C and/or decomposing the solution or a product of the drying step by heat treatment at a temperature ranging from 400 to 700°C to achieve an intermediate product; and
calcinating the intermediate product by heat treatment at a temperature ranging from 700 to less than 1300°C.

6. The method of claim 5, wherein the lithium source material is a compound soluble in acid and water.

7. The method of claim 6, wherein the lithium source material is selected from the group consisting of Li₂C₂O₄, LiOH, LiNO₃, Li₂SO₄, hydrates of LiOH, hydrates of LiNO₃, hydrates of Li₂SO₄, and combinations thereof.

8. The method of claim 7, wherein the lithium source material is lithium oxalate (Li₂C₂O₄).

9. The method of any of claims 5 to 8, wherein the vanadium source material is a water insoluble compound.

10. The method of claim 9, wherein the vanadium source material is selected from the group consisting of V₂O₃, V₂O₄, V₂O₅, NH₄VO₃, and combinations thereof.

11. The method of claim 10, wherein the vanadium source is V₂O₃.

12. The method of any of claims 5 to 11, wherein the acid is a carboxylic acid.

13. The method of claim 12, wherein the carboxylic acid is selected from the group consisting of oxalic acid, citric acid, and combinations thereof.

14. The method of claim 13, wherein the acid is oxalic acid.

15. The method of any of claims 5 to 14, wherein the M source material is selected from the group consisting of oxides, nitrides, hydroxides of transition elements, alkali metals, alkaline earth metals, semi-metals, and combinations thereof.

16. The method of claim 15, wherein the M source material is Cr₂(SO₄)₃.

17. The method of any of claims 5 to 16, wherein a volume ratio of water to acid is in the range of 1 : 0.5 to 1 : 5.

18. A rechargeable lithium battery comprising:
a negative electrode comprising a negative active material according to any of claims 1 to 4 or 18;
a positive electrode comprising a positive active material capable of reversibly intercalating and deintercalating lithium ions; and
an electrolyte.

## Patentansprüche

1. Negatives aktives Material für eine wiederaufladbare Lithiumbatterie, aufweisend:
eine Verbindung, die durch die Formel (1 dargestellt ist und eine durchschnittliche Partikelgröße im Bereich von 50 nm bis 30 µm aufweist:
LI₁₊ₓV_{1-x-y}M_{y}O_{2+z} (1)
wobei 0,01 ≤ x ≤ 0,5 ist, 0 < y ≤ 0,3 ist, -0,2 ≤ z ≤ 0,2 ist, und M aus der Gruppe bestehend aus Fe, Al, Cr, Mo, Ti, W, Zr, Sr, Mn und deren Kombinationen ausgewählt ist,
wobei das negative aktive Material **dadurch gekennzeichnet ist, dass**
ein spezifischer Oberflächenbereich des negativen aktiven Materials nach fünf Lade-/Entladezyklen bei 0,5C 2 bis 20mal größer ist als der spezifische Oberflächenbereich vor den Lade-/Entladezyklen vor den Lade-Entladezyklen.

2. Negatives aktives Material nach Anspruch 1, wobei M aus der Gruppe bestehend aus Cr, Ti, Co und deren Kombinationen ausgewählt ist.

3. Negatives aktives Material nach einem der vorhergehenden Ansprüche, wobei das negative aktive Material eine durchschnittliche Partikelgröße im Bereich von 0,5 µm bis 20 µm aufweist.

4. Negatives aktives Material nach einem der vorhergehenden Ansprüche, wobei y im Bereich von 0,005 bis 0,1 liegt.

5. Verfahren zur Herstellung eines negativen aktiven Materials für eine wiederaufladbare Lithiumbatterie nach einem der Ansprüche 1 bis 4, wobei das Verfahren die folgenden Schritte aufweist:
Mischen eines Lithiumquellenmaterials, eines Vanadiumquellenmaterials und eines M-Quellenmaterials in einem Lösungsmittelgemisch aus einer Säure und Wasser zum Herstellen einer Lösung;
Trocknen der Lösung durch eine Wärmebehandlung bei einer Temperatur im Bereich von 70 bis 400 °C und/oder Zersetzen der Lösung oder eines Produkts des Trocknungsschritts durch eine Wärmebehandlung bei einer Temperatur im Bereich von 400 bis 700 °C zum Gewinnen eines Zwischenprodukts; und
Kalzinieren des Zwischenprodukts durch Wärmebehandlung bei einer Temperatur im Bereich von 700 bis unter 1300 °C.

6. Verfahren nach Anspruch 5, wobei das Lithiumquellenmaterial eine in Säure und Wasser lösliche Verbindung ist.

7. Verfahren nach Anspruch 6, wobei das Lithiumquellenmaterial aus der Gruppe bestehend aus Li₂C₂O₄, LiOH, LiNO₃, Li₂SO₄, Hydraten von LiOH, Hydraten von LiNO₃, Hydraten von Li₂SO₄ und deren Kombinationen ausgewählt ist.

8. Verfahren nach Anspruch 7, wobei das Lithiumquellenmaterial Lithiumoxalat (Li₂C₂O₄) ist.

9. Verfahren nach einem der Ansprüche 5 bis 8, wobei das Vanadiumquellenmaterial eine wasserunlösliche Verbindung ist.

10. Verfahren nach Anspruch 9, wobei das Vanadiumquellenmaterial aus der Gruppe bestehend aus V₂O₃, V₂O₄, V₂O₅ NH₄VO₃ und deren Kombinationen ausgewählt ist.

11. Verfahren nach Anspruch 10, wobei die Vanadiumquelle V₂O₃ ist.

12. Verfahren nach einem der Ansprüche 5 bis 11, wobei die Säure eine Carbonsäure ist.

13. Verfahren nach Anspruch 12, wobei die Carbonsäure aus der Gruppe bestehend aus Oxalsäure, Zitronensäure und deren Kombinationen ausgewählt ist.

14. Verfahren nach Anspruch 13, wobei die Säure Oxalsäure ist.

15. Verfahren nach einem der Ansprüche 5 bis 14, wobei das M-Quellenmaterial aus der Gruppe bestehend aus Oxiden, Nitriden, Hydroxiden von Übergangselementen, Alkalimetallen, Erdalkalimetallen, Halbmetallen und deren Kombinationen ausgewählt ist.

16. Verfahren nach Anspruch 15, wobei die M-Quelle Cr₂(SO₄)₃ ist.

17. Verfahren nach einem der Ansprüche 5 bis 16, wobei ein Volumenverhältnis von Wasser zu Säure im Bereich von 1 : 0,5 bis 1 : 5 liegt.

18. Wiederaufladbare Lithiumbatterie, aufweisend:
eine negative Elektrode, die ein negatives aktives Material nach einem der Ansprüche 1 bis 4 oder 18 aufweist;
eine positive Elektrode, die ein positives aktives Material aufweist, das zur reversiblen Interkalation und Deinterkalation von Lithiumionen ausgebildet ist; und
einen Elektrolyt.

## Revendications

1. Matière active négative pour une batterie au lithium rechargeable, comprenant :
un composé représenté par la formule (1) et ayant un diamètre moyen de particule allant de 50 nm à 30 µm:
Li₁₊ₓV_{1-x-y}M_{y}O_{2+z} (1)
formule dans laquelle 0,01 ≤ x ≤ 0,5, 0 < y ≤ 0,3,
- 0, 2 ≤ z ≤ 0, 2 et M est choisi dans le groupe consistant en Fe, Al, Cr, Mo, Ti, W, Zr, Sr, Mn et leurs associations, ladite matière active négative étant **caractérisée en ce que**
une surface spécifique de la matière active négative après cinq cycles de charge/décharge à 0,5 C est 2 à 20 fois supérieure à la surface spécifique avant les cycles de charge/décharge avant les cycles de charge/décharge.

2. Matière active négative suivant la revendication 1, dans laquelle M est choisi dans le groupe consistant en Cr, Ti, Co et leurs associations.

3. Matière active négative suivant l'une quelconque des revendications précédentes, ladite matière active négative ayant un diamètre moyen de particule allant de 0,5 µm à 20 µm.

4. Matière active négative suivant l'une quelconque des revendications précédentes, dans laquelle y va de 0,005 à 0,1.

5. Procédé pour produire une matière active négative pour une batterie au lithium rechargeable représentée par l'une quelconque des revendications 1 à 4, le procédé comprenant les étapes consistant à :
mélanger une matière servant de source de lithium, une matière servant de source de vanadium et une matière servant de source de M dans un mélange de solvants constitué d'un acide et d'eau pour préparer une solution ;
déshydrater la solution par un traitement thermique à une température allant de 70 à 400°C et/ou décomposer la solution ou un produit de l'étape de déshydratation par un traitement thermique à une température allant de 400 à 700°C pour obtenir un produit intermédiaire ; et
calciner le produit intermédiaire par un traitement thermique à une température allant de 700 à moins de 1300°C.

6. Procédé suivant la revendication 5, dans lequel la matière servant de source de lithium est un composé soluble dans un acide et l'eau.

7. Procédé suivant la revendication 6, dans lequel la matière servant de source de lithium est choisie dans le groupe consistant en Li₂C₂O₄, LiOH, LiNO₃, Li₂SO₄, des hydrates de LiOH, des hydrates de LiNO₃, des hydrates de Li₂SO₄ et leurs associations.

8. Procédé suivant la revendication 7, dans lequel la matière servant de source de lithium est l'oxalate de lithium (Li₂C₂O₄).

9. Procédé suivant l'une quelconque des revendications 5 à 8, dans lequel la matière servant de source de vanadium est un composé insoluble dans l'eau.

10. Procédé suivant la revendication 9, dans lequel la matière servant de source de vanadium est choisie dans le groupe consistant en V₂O₃, V₂O₄, V₂O₅, NH₄VO₃ et leurs associations.

11. Procédé suivant la revendication 10, dans lequel la source de vanadium est V₂O₃.

12. Procédé suivant l'une quelconque des revendications 5 à 11, dans lequel l'acide est un acide carboxylique.

13. Procédé suivant la revendication 12, dans lequel l'acide carboxylique est choisi dans le groupe consistant en l'acide oxalique, l'acide citrique et leurs associations.

14. Procédé suivant la revendication 13, dans lequel l'acide est l'acide oxalique.

15. Procédé suivant l'une quelconque des revendications 5 à 14, dans lequel la matière servant de source de M est choisie dans le groupe consistant en des oxydes, nitrures, hydroxydes d'éléments de transition, métaux alcalins, métaux alcalinoterreux, semi-métaux et leurs associations.

16. Procédé suivant la revendication 15, dans lequel la matière servant de source de M est Cr₂(SO₄)₃.

17. Procédé suivant l'une quelconque des revendications 5 à 16, dans lequel le rapport volumique de l'eau à l'acide est compris dans l'intervalle de 1:0,5 à 1:5.

18. Batterie au lithium rechargeable comprenant :
une électrode négative comprenant une matière active négative suivant l'une quelconque des revendications 1 à 4 ou 18 ;
une électrode positive comprenant une matière active positive apte à l'intercalation et à la désintercalation réversibles des ions lithium ; et
un électrolyte.
